# EUROPÄISCHE PATENTANMELDUNG

(11) **EP 1 804 353 A1**
(43) Veröffentlichungstag der Anmeldung: **04.07.2007**
(21) Anmeldenummer: 06021917.7
(22) Anmeldetag: 19.10.2006
(51) Int. Cl.: H02G 3/14, H02H 9/02

(54) **Elektrisches/elektronisches Installationsgerät**

(30) Priorität: 27.12.2005 DE 102005062489
(71) Anmelder: Insta Elektro GmbH, 58511 Lüdenscheid (DE)
(72) Erfinder: Hilleke, Dieter, Dipl.-Ing., 57413 Finnentrop (DE); Stecura, Darius, Dipl.-Ing., 45731 Waltrop (DE); Schlicht, Thomas, Dipl.-Ing., 58093 Hagen (DE)

(57) **Zusammenfassung**

Es wird ein elektrisches/elektronisches Installationsgerät vorgeschlagen, welches eine von einem Gehäuse aufgenommene Leiterplatte aufweist. Zu dem Zweck, ein elektrisches/elektronisches Installationsgerät zu schaffen, bei dem hinsichtlich der Betätigungsart der bestückten Betätigungselemente auch während bzw. nach der Inbetriebnahme im Gebäude noch flexibel auf Kundenwünsche auf einfache Art und Weise reagiert werden kann, sind zumindest die Bestückungsplätze der zur Beeinflussung der Aktoren vorgesehenen, als Schalter ausgebildeten Funktionselemente in einer Matrix angeordnet auf der Oberseite der Leiterplatte vorhanden, zudem stehen die Bestückungsplätze der Schalter mit einer Betätigungselementartenstufe in Verbindung, in der die Platzierung und die Größe der zu bestückenden Betätigungselemente abgespeichert sind, außerdem stehen die Bestückungsplätze der Schalter mit einer Betätigungsartenstufe in Verbindung, in welcher die Betätigungsrichtung bzw. die Betätigungsrichtungen für die vorgesehenen Betätigungselemente abgespeichert sind.

## Beschreibung

Die vorliegende Erfindung geht von einem gemäß Oberbegriff des Hauptanspruches konzipierten elektrischen/elektronischen Installationsgerät aus.

Derartige elektrische/elektronische Installationsgeräte sind in der Regel dafür vorgesehen, eine Vielzahl von in Gebäuden installierten Aktoren (Jalousieantriebe, Beleuchtungseinrichtungen, Fühler, Wächter usw.) bedarfsgerecht zu beeinflussen. Zu diesem Zweck sind die unterschiedlichsten Installationseinrichtungen, wie Schalter, Taster, Dimmer usw. bekannt geworden. Diese können sowohl mit als linear zu betätigende Drucktasten, als auch mit als schwenkbar zu betätigende Wipptasten sowie gegebenenfalls mit einer Anzeigeeinrichtung versehen sein.

Durch die DE 40 00 623 A1 ist ein dem Oberbegriff des Hauptanspruches entsprechendes elektrisches/elektronisches Installationsgerät für die Gebäudesystemtechnik bekannt geworden. Bei diesem elektrischen/elektronischen Installationsgerät für die Gebäudesystemtechnik ist eine Leiterplatte vorgesehen auf dessen Oberseite alle zur Bedienung der zugeordneten Aktoren notwendigen Funktionselemente angeordnet sind. Der Leiterplatte kann lediglich ein einziges Betätigungselement zugeordnet werden, was von vorne herein sowohl in seiner Ausführungsart als Drucktaste oder als Wipptaste, als auch seiner Betätigungsart festgelegt ist. Ein flexibles Reagieren auf Kundenwünsche hinsichtlich Ausführungsart und Betätigungsart von Betätigungselementen ist somit nicht möglich.

Zudem ist durch die DE 198 47 225 A1 ein elektrisches/elektronisches Installationsgerät bekannt geworden, welches mehrere auch unterschiedlich ausgestaltete Betätigungselemente aufweisen kann. Jedoch sind bei diesem Installationsgerät die Betätigungselemente von vorne herein, d. h. bei der Herstellung des Installationsgerätes sowohl bezüglich ihrer Ausführungsart, als auch bezüglich ihrer Betätigungsart festgelegt. Ein flexibles Reagieren auf Kundenwünsche während bzw. nach der Inbetriebnahme eines solchen Installationsgerätes bezüglich der Betätigungsart der installierten Betätigungselemente ist somit nicht möglich.

Ausgehend von derart ausgebildeten elektrischen/elektronischen Installationsgeräten liegt der vorliegenden Erfindung die Aufgabe zugrunde, ein Installationsgerät zu schaffen, bei dem hinsichtlich der Betätigungsart der bestückten Betätigungselemente auch während bzw. nach der Inbetriebnahme des Installationsgerätes im Gebäude noch flexibel auf Kundenwünsche auf einfache Art und Weise reagiert werden kann.

Erfindungsgemäß wird diese Aufgabe durch die im Hauptanspruch angegebenen Merkmale gelöst.

Bei einer solchen Ausbildung ist besonders vorteilhaft, dass durch die matrixartige Anordnung der Bestückungsplätze der Funktionselemente auf der Oberseite der Leiterplatte eine besonders flexible Auswahlmöglichkeit hinsichtlich der Bestückung mit verschiedenartig ausgeführten Bedienelementen, Anzeigeeinrichtungen usw. besteht.

Weitere vorteilhafte Ausgestaltungen des erfindungsgemäßen Gegenstandes sind in den Unteransprüchen angegeben. Anhand eines Ausführungsbeispiels sei die Erfindung im Prinzip näher erläutert, dabei zeigt:
- Fig. 1:: prinziphaft ein solches elektrisches/elektronisches Installationsgerät in Explosionsdarstellung;
- Fig. 2:: prinziphaft die Oberseite der Leiterplatte eines solchen elektrischen/elektronischen Installationsgeräts, in räumlicher Darstellung;
- Fig. 3:: prinziphaft die Unterseite der Leiterplatte eines solchen elektrischen/elektronischen Installationsgeräts, in räumlicher Darstellung.

Wie aus den Figuren hervorgeht, besteht ein solches elektrisches/elektronisches Installationsgerät für die Gebäudesystemtechnik hauptsächlich aus einer Leiterplatte 1, die von einem Gehäuse 2 aufgenommen ist. Zur Festlegung in einer Installationsdose 3 kann das Gehäuse 2 einem Tragring 4 zugeordnet werden. Auf der Oberseite der Leiterplatte 1 sind alle zur Bedienung der zugeordneten Aktoren notwendigen Funktionselemente angeordnet. Die Unterseite der Leiterplatte 1 weist alle für den Betrieb in einem Bussystem notwendigen Funktionsbauteile auf.

Wie des weiteren aus den Figuren hervorgeht, ist das Gehäuse 2 unter Zwischenschaltung eines Zierrahmens 5 dem an der Installationsdose 3 festgeschraubten Tragring 4 zuzuordnen. Damit auf einfache Art und Weise eine Festlegung in der Installationsdose 3 erfolgen kann, weist das Gehäuse 2 Federelemente 6 auf, die hinter entsprechend ausgebildete, der Einfachheit halber nicht dargestellte Haltenasen des Tragrings 4 greifen. Auf der Oberseite der Leiterplatte 1 sind die zur Beeinflussung der Aktoren notwendigen Funktionselemente vorhanden. Ein Teil dieser Funktionselemente ist jeweils als Schalter 7 ausgebildet. Die in einer Matrix angeordnet auf der Oberseite der Leiterplatte 1 angeordneten Schalter 7 sind dabei alle als Mikroschalter bzw. Mikrotaster ausgeführt und von mehreren verstellbar am Gehäuse 1 gelagerten Betätigungselementen 8 überdeckt. Somit sind selbstverständlich auch die Bestückungsplätze für die Schalter 7 in einer Matrix angeordnet. Insgesamt sind sechzehn Schalter 7 bzw. Bestückungsplätze auf der Oberseite der Leiterplatte 1 vorgesehen. Die Bestückungsplätze bzw. die Schalter 7 stehen mit einer Betätigungselementenartenstufe 9 in Verbindung, in der Platzierung und Größe der zu bestückenden Betätigungselemente 8 abgespeichert werden können. Außerdem stehen die Bestückungsplätze bzw. die Schalter 7 mit einer Betätigungsartenstufe 10 in Verbindung, in welcher die Betätigungsrichtung bzw. die Betätigungsrichtungen der zu bestückenden Betätigungselemente 8 abgespeichert werden können.

Sowohl die Betätigungselementenartenstufe 9 als auch die Betätigungsartenstufe 10 sind in ein Funktionsbauteil integriert, dass als Mikrocontroller 11 ausgeführt und auf der Unterseite der Leiterplatte 1 angeordnet ist.

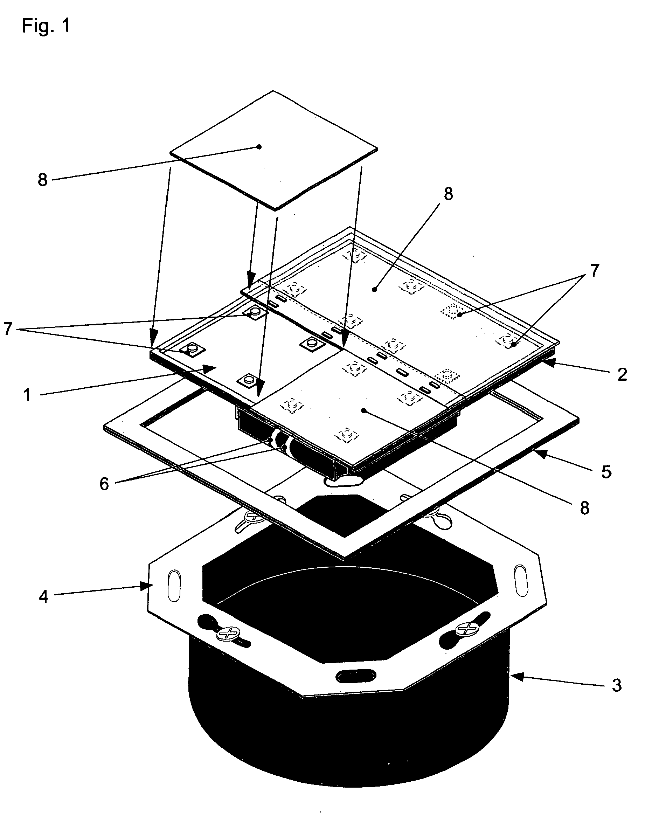

Wie des weiteren insbesondere aus Figur 1 hervorgeht, sind am Gehäuse 2 drei Betätigungselemente 8 gelagert. Zwei Betätigungselemente 8 sind dabei jeweils vier Schalter/Taster 7 und einem Betätigungselement 8 sind dabei acht Schalter/Taster 7 zugeordnet.

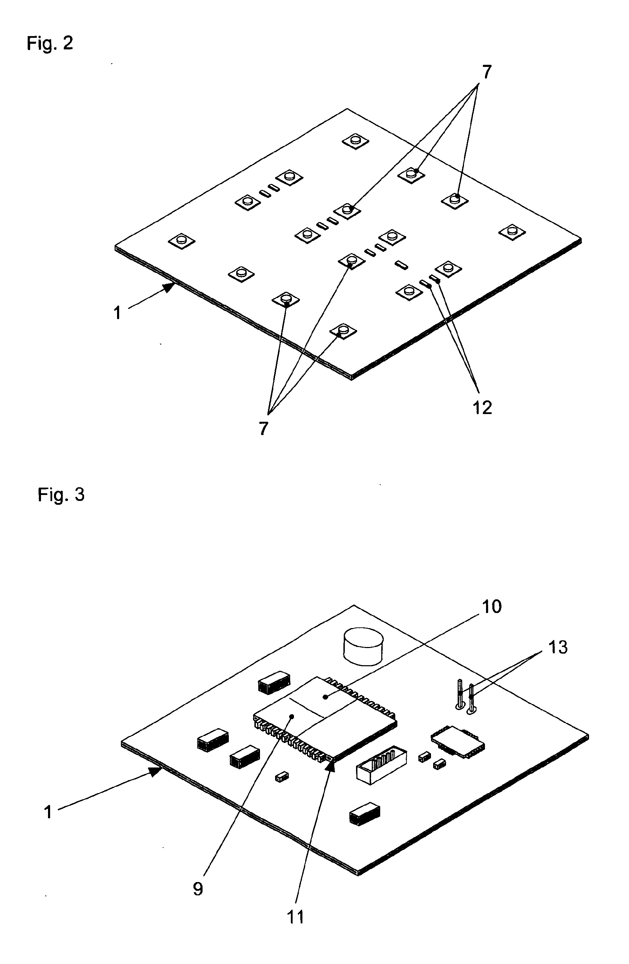

Wie insbesondere aus Figur 2 hervorgeht, sind auf der Oberseite der Leiterplatte 1 in zwei Reihen nebeneinander acht Schalter 7 angeordnet. Jedem der als Mikroschalter bzw. Mikrotaster ausgebildeten acht Schalter 7 ist jeweils eine LED 12 zugeordnet. Insbesondere für die Statusanzeige ist zusätzlich noch eine weitere LED 12 auf der Oberseite der Leiterplatte 1 vorhanden.

Wie insbesondere aus Figur 3 hervorgeht, bilden mehrere auf der Unterseite der Leiterplatte 1 angeordnete Funktionsbauteile die Busankopplung, wobei für den Busanschluss zwei Steckkontaktstifte 13 vorgesehen sind.

## Patentansprüche

1. Elektrisches/elektronisches Installationsgerät für die Gebäudesystemtechnik mit einer Leiterplatte auf dessen Oberseite alle zur Bedienung der zugeordneten Aktoren notwendigen Funktionselemente angeordnet sind, **dadurch gekennzeichnet, dass** zumindest die Bestückungsplätze der zur Beeinflussung der Aktoren vorgesehenen, als Schalter (7) ausgebildeten Funktionselemente in einer Matrix angeordnet auf der Oberseite der Leiterplatte (1) vorhanden sind, und dass die Bestückungsplätze der Schalter (7) mit einer Betätigungselementartenstufe (9) in Verbindung stehen, in der die Platzierung und die Größe der zu bestückenden Betätigungselemente (8) abgespeichert sind, und dass die Bestückungsplätze der Schalter (7) mit einer Betätigungsartenstufe (10) in Verbindung stehen, in welcher die Betätigungsrichtung bzw. die Betätigungsrichtungen für die vorgesehenen Betätigungselemente (8) abgespeichert sind.

2. Elektrisches/elektronisches Installationsgerät nach Anspruch 1, **dadurch gekennzeichnet, dass** zumindest einem Betätigungselement (8) zwei Schalter (7) bzw. zwei Bestückungsplätzen von Schaltern (7) zugeordnet sind.

3. Elektrisches/elektronisches Installationsgerät nach Anspruch 1 oder 2, **dadurch gekennzeichnet, dass** zumindest einem Betätigungselement (8) vier Schalter (7) bzw. vier Bestückungsplätzen von Schaltern (7) zugeordnet sind.

4. Elektrisches/elektronisches Installationsgerät nach einem der Ansprüche 1 bis 3, **dadurch gekennzeichnet, dass** zumindest einem Betätigungselement (8) acht Schalter (7) bzw. acht Bestückungsplätzen von Schaltern (7) zugeordnet sind.

5. Elektrisches/elektronisches Installationsgerät nach einem der Ansprüche 1 bis 4, **dadurch gekennzeichnet, dass** zumindest ein Betätigungselement (8) als linear zu betätigende Drucktaste ausgeführt ist.

6. Elektrisches/elektronisches Installationsgerät nach einem der Ansprüche 1 bis 5, **dadurch gekennzeichnet, dass** zumindest ein Betätigungselement (8) als schwenkbar zu betätigende Wipptaste ausgeführt ist.

7. Elektrisches/elektronisches Installationsgerät nach einem der Ansprüche 1 bis 6, **dadurch gekennzeichnet, dass** auf der Leiterplatte (1) alle für den Betrieb in einem Bussystem notwendigen Funktionsbauteile angeordnet sind.

8. Elektrisches/elektronisches Installationsgerät nach einem der Ansprüche 1 bis 7, **dadurch gekennzeichnet, dass** zumindest einem als Schalter (7) ausgebildeten Funktionselement ein als LED (12) ausgebildetes Funktionselement zugeordnet ist.

9. Elektrisches/elektronisches Installationsgerät nach einem der Ansprüche 1 bis 8, **dadurch gekennzeichnet, dass** zumindest ein außerhalb der Matrixanordnung angeordnetes Funktionselement auf der Oberseite der Leiterplatte (1) vorhanden ist.

10. Elektrisches/elektronisches Installationsgerät nach einem der Ansprüche 1 bis 9, **dadurch gekennzeichnet, dass** zumindest ein auf der Unterseite der Leiterplatte (1) angeordnetes Funktionsbauteil als Mikrocontroller (11) ausgeführt ist.

11. Elektrisches/elektronisches Installationsgerät nach einem der Ansprüche 1 bis 10, **dadurch gekennzeichnet, dass** zumindest ein auf der Leiterplatte (1) angeordnetes Funktionsbauteil den Speicher für die Anwendungssoftware aufweist.

12. Elektrisches/elektronisches Installationsgerät nach einem der Ansprüche 1 bis 11, **dadurch gekennzeichnet, dass** zumindest ein Funktionsbauteil die Betätigungselementenartenstufe (9) aufweist.

13. Elektrisches/elektronisches Installationsgerät nach einem der Ansprüche 1 bis 12, **dadurch gekennzeichnet, dass** zumindest ein Funktionsbauteil die Betätigungsartenstufe (10) aufweist.

14. Elektrisches/elektronisches Installationsgerät nach einem der Ansprüche 1 bis 13, **dadurch gekennzeichnet, dass** zumindest ein die Betätigungselemente (8) bzw. die Betätigungsrichtung(-en) betreffender Parameter während des Herstellungsprozesses in der Betätigungselementenartenstufe (9) und/oder in der Betätigungsartenstufe (10) abgelegt wird.

15. Elektrisches/elektronisches Installationsgerät nach einem der Ansprüche 1 bis 14, **dadurch gekennzeichnet, dass** zumindest ein die Betätigungselemente (8) bzw. die Betätigungsrichtung (-en) betreffender Parameter während der Inbetriebnahme am Bestimmungsort in der Betätigungselementenartenstufe (9) und/oder in der Betätigungsartenstufe (10) abgelegt wird.

16. Elektrisches/elektronisches Installationsgerät nach einem der Ansprüche 1 bis 15, **dadurch gekennzeichnet, dass** zumindest ein Schalter (7) als oberflächenmontierbarer Mikroschalter ausgebildet ist.

17. Elektrisches/elektronisches Installationsgerät nach einem der Ansprüche 1 bis 16, **dadurch gekennzeichnet, dass** zumindest ein Schalter (7) als Schaltelement einer sogenannten Domschaltmatte ausführt ist.

18. Elektrisches/elektronisches Installationsgerät nach einem der Ansprüche 1 bis 17, **dadurch gekennzeichnet, dass** mehrere auf der Unterseite der Leiterplatte (1) vorhandene Funktionsbauteile eine Busankopplung bilden.

## Geänderte Patentansprüche

### Geänderte Patentansprüche gemäss Regel 86(2) EPÜ.

**1.** Elektrisches/elektronisches Installationsgerät für die Gebäudesystemtechnik mit einer Leiterplatte (1) auf dessen Oberseite alle zur Bedienung der zugeordneten Aktoren notwendigen Funktionselemente angeordnet sind, und dass zumindest die Bestückungsplätze der zur Beeinflussung der Aktoren vorgesehenen, als Schalter (7) ausgebildeten Funktionselemente in einer Matrix angeordnet auf der Oberseite der Leiterplatte (1) vorhanden sind, und dass die Bestückungsplätze der Schalter (7) mit einer Betätigungselementenartenstufe (9) in Verbindung stehen, in der die Platzierung und die Größe der zu bestückenden Betätigungselemente (8) flexibel hinsichtlich der Auswahlmöglichkeit verschiedenartig ausgeführter Betätigungselemente (8) abgespeichert sind, wobei zumindest einem Betätigungselement (8) vier Schalter (7) bzw. vier Bestückungsplätzen von Schaltern (7) zugeordnet sind, und dass die Bestückungsplätze der Schalter (7) mit einer Betätigungsartenstufe (10) in Verbindung stehen, in welcher die Betätigungsrichtung bzw. die Betätigungsrichtungen für die vorgesehenen Betätigungselemente (8) flexibel hinsichtlich der Auswahlmöglichkeit verschiedenartig ausgeführter Betätigungselemente (8) abgespeichert sind, und dass sowohl die Betätigungselementenartenstufe (9) als auch die Betätigungsartenstufe (10) in ein als Mikrocontroller (11) ausgeführtes Funktionsbauteil integriert sind, welches auf der Unterseite der Leiterplatte (1) angeordnet ist.

**2.** Elektrisches/elektronisches Installationsgerät nach Anspruch 1, **dadurch gekennzeichnet, dass** zumindest einem Betätigungselement (8) acht Schalter (7) bzw. acht Bestückungsplätzen von Schaltern (7) zugeordnet sind.

**3.** Elektrisches/elektronisches Installationsgerät nach einem der Ansprüche 1 oder 2, **dadurch gekennzeichnet, dass** zumindest ein Betätigungselement (8) als linear zu betätigende Drucktaste ausgeführt ist.

**4.** Elektrisches/elektronisches Installationsgerät nach einem der Ansprüche 1 bis 3, **dadurch gekennzeichnet, dass** zumindest ein Betätigungselement (8) als schwenkbar zu betätigende Wipptaste ausgeführt ist.

**5.** Elektrisches/elektronisches Installationsgerät nach einem der Ansprüche 1 bis 4, **dadurch gekennzeichnet, dass** auf der Leiterplatte (1) alle für den Betrieb in einem Bussystem notwendigen Funktionsbauteile angeordnet sind.

**6.** Elektrisches/elektronisches Installationsgerät nach einem der Ansprüche 1 bis 5, **dadurch gekennzeichnet, dass** zumindest einem als Schalter (7) ausgebildeten Funktionselement ein als LED (12) ausgebildetes Funktionselement zugeordnet ist.

**7.** Elektrisches/elektronisches Installationsgerät nach einem der Ansprüche 1 bis 6, **dadurch gekennzeichnet, dass** zumindest ein außerhalb der Matrixanordnung angeordnetes Funktionselement auf der Oberseite der Leiterplatte (1) vorhanden ist.

**8.** Elektrisches/elektronisches Installationsgerät nach einem der Ansprüche 1 bis 7, **dadurch gekennzeichnet, dass** zumindest ein auf der Unterseite der Leiterplatte (1) angeordnetes Funktionsbauteil als Mikrocontroller (11) ausgeführt ist.

**9.** Elektrisches/elektronisches Installationsgerät nach einem der Ansprüche 1 bis 8, **dadurch gekennzeichnet, dass** zumindest ein auf der Leiterplatte (1) angeordnetes Funktionsbauteil den Speicher für die Anwendungssoftware aufweist.

**10.** Elektrisches/elektronisches Installationsgerät nach einem der Ansprüche 1 bis 9, **dadurch gekennzeichnet, dass** zumindest ein die Betätigungselemente (8) bzw. die Betätigungsrichtung(-en) betreffender Parameter während des Herstellungsprozesses in der Betätigungselementenartenstufe (9) und/oder in der Betätigungsartenstufe (10) abgelegt wird.

**11.** Elektrisches/elektronisches Installationsgerät nach einem der Ansprüche 1 bis 10, **dadurch gekennzeichnet, dass** zumindest ein die Betätigungselemente (8) bzw. die Betätigungsrichtung (-en) betreffender Parameter während der Inbetriebnahme am Bestimmungsort in der Betätigungselementenartenstufe (9) und/oder in der Betätigungsartenstufe (10) abgelegt wird.

**12.** Elektrisches/elektronisches Installationsgerät nach einem der Ansprüche 1 bis 11, **dadurch gekennzeichnet, dass** zumindest ein Schalter (7) als oberflächenmontierbarer Mikroschalter ausgebildet ist.

**13.** Elektrisches/elektronisches Installationsgerät nach einem der Ansprüche 1 bis 12, **dadurch gekennzeichnet, dass** zumindest ein Schalter (7) als Schaltelement einer sogenannten Domschaltmatte ausführt ist.

**14.** Elektrisches/elektronisches Installationsgerät nach einem der Ansprüche 1 bis 13, **dadurch gekennzeichnet, dass** mehrere auf der Unterseite der Leiterplatte (1) vorhandene Funktionsbauteile eine Busankopplung bilden.
